# EUROPÄISCHE PATENTSCHRIFT

(11) **EP 0 657 074 B1**
(45) Veröffentlichungstag und Bekanntmachung des Hinweises auf die Patenterteilung: **21.10.1998**
(21) Anmeldenummer: 93917530.3
(22) Anmeldetag: 06.08.1993
(51) Int. Cl.: H04B 7/26, H04Q 7/36

(54) **MOBILES FUNKNETZ**
MOBILE RADIO NETWORK
RESEAU RADIOPHONIQUE MOBILE

(30) Priorität: 26.08.1992 DE 4228275
(43) Veröffentlichungstag der Anmeldung: 14.06.1995
(73) Patentinhaber: SIEMENS AKTIENGESELLSCHAFT, 80333 München (DE)
(72) Erfinder: RITTER, Gerhard, D-86943 Thaining (DE); SCHREIB, Franz, D-81476 München (DE); SCHULZ, Egon, D-80993 München (DE)
(86) Internationale Anmeldenummer: DE9300700
(87) Internationale Veröffentlichungsnummer: WO9405096

(56) Entgegenhaltungen:
- EP-A- 0 150 399
- EP-A- 0 531 090
- DE-A- 2 806 178
- GB-A- 2 261 575
- PATENT ABSTRACTS OF JAPAN Bd. 16, Nr. 31 (E-1159) & JP-A-03 244 224 (NEC CORP) 31 Oktober 1991

## Beschreibung

Die Erfindung bezieht sich auf ein mobiles Funknetz mit einer Anzahl von Basisstationen in gegenseitiger räumlicher Anordnung nach Art eines Zellularsystems, bei dem eine ringförmige Struktur mit um das Zentrum plazierten Zellringen vorgesehen ist, sowie eine zentrale Basisstation im Zentrum mit auf einem erhöhten Standort installierten Antennen, die als stark bündelnde Richtantennen ausgebildet sind.

Ein solches Funknetz ist durch Patent Abstracts of Japan, BD. 16, Nr. 31 (E - 1159) und JP-A-32-44224 bekannt. Dabei werden die ringförmig um eine zentrale Basisstation angeordneten Funkzonen (Zellen) von den auf einem erhöhten Standort im Zentrum der zentralen Basisstation installierten Antennen ausgeleuchtet. Die elektromagnetische Strahlung der stark bündelnden Richtantennen ist unter einem dem auszuleuchtenden Zellring entsprechenden Winkel schräg nach unten gerichtet.

In der älteren internationalen Anmeldung WO 93/23935 im Sinne des Artikels 54 (3) EPÜ ist ein mobiles Funknetz mit einer Anzahl von Basisstationen in gegenseitiger räumlicher Anordnung nach Art eines Zellularsystems beschrieben, bei dem eine ringförmige Struktur mit um das Zentrum plazierten Ringen vorgesehen ist und eine Unterteilung jedes Zellrings in Sektoren entsprechend der Anzahl der Zellen innerhalb der Ringe mit unterschiedlichen Frequenzen in benachbarten Sektoren. Im Zentrum ist eine zentrale Basisstation angeordnet zur Ausleuchtung aller Zellen bzw. den Empfang aus den einzelnen Zellen mit auf einem erhöhten Standort installierten Antennen, die als stark bündelnde Richtantennen ausgebildet sind und wenigstens zwei vom Antennenstandort in radialer Richtung liegende Zellen innerhalb desselben Sektors mit jeweils derselben Frequenz versorgen.

In der älteren europäischen Patentanmeldung EP-A-0 531 090 im Sinne des Artikels 54 (3)EPÜ ist eine Zell-Wiederbenutzungsaufteilung in einem Mobilfunksystem beschrieben, bei dem eine äußere Zelle und eine in der äußeren Zelle angeordnetee innere Zelle vorgesehen sind. Die Antennen der Basisstation innerhalb der inneren Zelle strahlen unter einem entsprechenden Neigungswinkel auf die jeweiligen Zellen. Das Intervall von Zellen, die denselben Kanal oder dieselbe Frequenz in inneren Zellen benutzen, ist dabei kürzer als das Intervall in äußeren Zellen.

In einem mobilen Funknetz mit dem Vielfachzugriffsverfahren CDMA, wie es beispielsweise in dem Artikel ,,Overview of Cellular CDMA" von William C.Y. Lee, erschienen in IEEE Transactions on Vehicular Technology, Vol. 40, No. 2, May 1991, Seiten 291 bis 302 beschrieben ist, werden die Benutzer (Mobilstation) durch unterschiedliche Spreizcodes unterschieden. Spreizcodes können durch PN-Codes oder PN-Sequenzen (PN = Pseudo Noise) repräsentiert werden.

Im Rahmen der Versorgung von Regionen mit Mobilfunkdiensten besteht aufgrund von hohen Frequenzen und der Teilnehmerdichte in Ballungsräumen die Tendenz zu kleinen Funkzellen. Dadurch steigt jedoch auch die erforderliche Zahl von Basisstationen, was wiederum zu hohen Infrastrukturkosten führt.

Der Erfindung liegt die Aufgabe zugrunde, eine Lösung anzugeben, um die Investitionen in der Infrastruktur zu reduzieren.

Diese Aufgabe wird bei einem mobilen Funknetz der einleitend beschriebenen Art gelöst durch eine Ausbildung gemäß dem kennzeichnenden Teil der Ansprüche 1, 2 und 3.

Durch die erfindungsgemäßen Maßnahmen ergibt sich eine Verringerung der Infrastrukturkosten, eine Reduzierung von Mehrwegausbreitung, eine Erhöhung der Flexibilität bei der dynamischen Kanalzuweisung sowie die Möglichkeit des dynamischen Zell-Splittings. Es besteht hierbei die Zuweisung einer Konfiguration an eine Richtantenne und nicht nur eine Menge von Frequenzen. Eine Konfiguration ist eine Menge von Frequenzbändern und Code-Sequenzen, Zeitschlitzen oder Polarisationsebenen der gesendeten Wellen, die einzeln oder in beliebiger Kombination miteinander genutzt werden können. Nutzt man bei der Zusammenstellung einer Konfiguration nur die Freiheitsgrade Frequenzbänder und Zeitschlitze, so hat man ein reines F/TDMA-System. Nutzt man dagegen nur die Freiheitsgrade Frequenzbänder und Code Sequenzen, so hat man ein reines CDMA-(Code Division Multiple Access) System. Das Prinzip von CDMA besteht darin, Mobilfunkteilnehmer nicht durch unterschiedliche Frequenzen, sondern durch Sequenzen von Codes zu unterscheiden. Die Signale für alle Teilnehmer werden im selben Frequenzband gesendet; das Empfangssignal wird nun vom Teilnehmer mit seiner Codesequenz ermittelt. Auf diese Weise erhält er das ihm zugedachte Sendesignal. Man unterscheidet zwei Spreizungstechniken bei CDMA, nämlich Spreizung durch Spreizcodes (Direct Sequence Code) und Spreizung durch Frequency Hopping. Bei der ersten Art werden die Nutzdaten der Teilnehmer mit einem Spreizcode gefaltet und über ein gemeinsames Frequenzband oder über mehrere Frequenzbänder übertragen. Werden mehrere Frequenzbänder benutzt, so werden die Teilnehmer auf die einzelnen Frequenzbänder aufgeteilt. Beim Frequency Hopping wird dem Teilnehmer ständig ein anderer nach einer Code Sequenz vorgegebener schmalbandiger Bereich des Frequenzbandes oder mehrerer Frequenzbänder zugewiesen.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen
- Figur 1: in schematischer Darstellung eine Netzstruktur mit zentaler Basisstation,
- Figur 2: ein Szenario mit fünf Entfernungsbereichen mit Cluster Size 4,
- Figur 3: ein Szenario mit fünf Entfernungsbereichen mit Cluster Size 8 und
- Figur 4: ein Szenario mit fünf Entfernungsbereichen mit variabler Zellenstruktur.

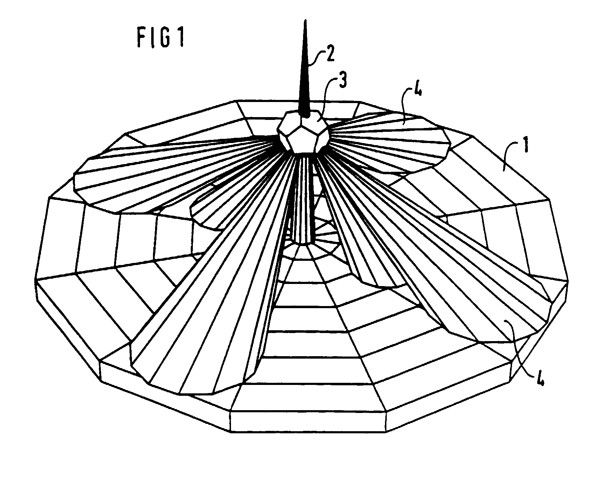

In Figur 1 ist eine Netzstruktur mit sieben Entfernungsbereichen dargestellt, die ringförmig um eine im Zentrum angeordnete Basisstation plaziert sind. Die Antennen 3 sind auf einem Turm 2 angeordnet, wobei es sinnvoll sein kann, auch die übrigen Einrichtungen der Basisstation möglichst in Antennennähe anzuordnen, um kurze Antennenzuleitungen zu erhalten. Einige von den Antennen 3 ausgehende Strahlungskeulen 4 sind eingezeichnet, die bestimmte Zellen ausleuchten. Die Zellgrenzen sind dabei durch das Antennendiagramm festzulegen, um innerhalb eines Sektors mehrere Zellen mit derselben Konfiguration zu versorgen.

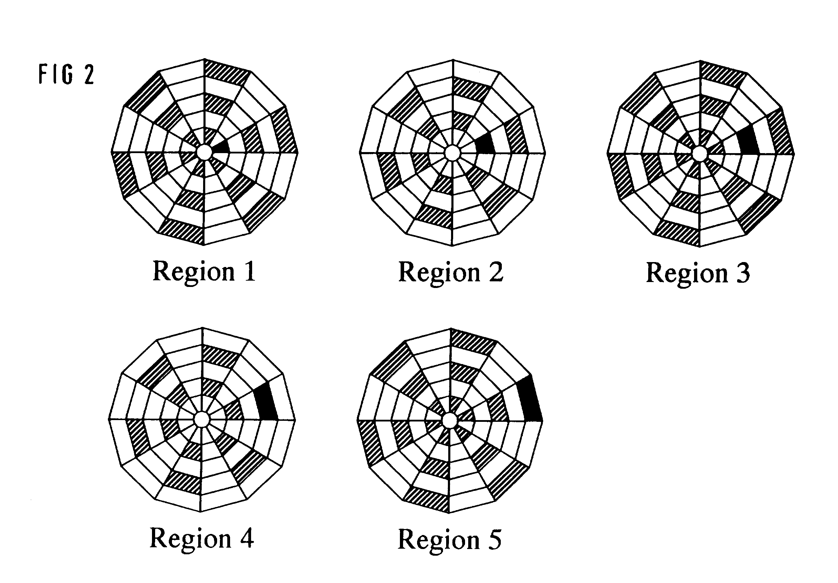

Figur 2 zeigt ein Szenario mit fünf Entfernungsbereichen mit Cluster Size 4. Entsprechend den fünf Entfernungsbereichen sind fünf Teildarstellungen gezeigt, die als Region 1 bis 5 bezeichnet sind. Die einzelnen Entfernungsbereiche sind ringförmig um eine in der Mitte angeordnete Basisstation plaziert. Jeder Entfernungsbereich besteht aus nebeneinander liegenden Zellen, deren Anzahl derjenigen der Sektoren entspricht, in die die Gesamtstruktur aufgeteilt ist. Im vorliegenden Beispiel sind es 12 Sektoren von jeweils 30°. Diese Zahl ist jedoch beliebig veränderbar, so daß breitere oder schmalere Sektoren entstehen und auch die Sektorengröße von Entfernungsbereich zu Entfernungsbereich unterschiedlich sein kann.

In Figur 2 ist in jeder Teildarstellung jeweils eine schwarz gezeichnete Zelle vorgesehen, die die Zelle darstellt, deren Signal als Nutzsignal betrachtet wird und die von Region 1 bis Region 5 sich in jeweils einer der Entfernungsbereiche befindet. Ferner sind schraffiert gezeichnete Zellen vorgesehen, die in anderen Entfernungsbereichen und Sektoren liegen, die mit der gleichen Konfiguration arbeiten wie die betrachtete schwarz gezeichnete Zelle, also für diese Störsignale darstellen. Die hellen Zellen in den einzelnen Darstellungen werden als neutrale Zellen bezeichnet und stellen benachbarte Zellen im gleichen Sektor oder Zellen benachbarter Sektoren dar, die mit einer anderen Konfiguration gegenüber der betrachteten schwarz gezeichneten Zelle arbeiten.

Cluster Size 4 im betrachteten Beispiel bedeutet, daß in einem Sektor zwei verschiedene Konfigurationen verwendet werden und in einem benachbarten Sektor wiederum zwei andere, von den erstgenannten verschiedene Konfigurationen. Für die Teildarstellung Region 1 bedeutet dies, daß eine erste Konfiguration k1 im Entfernungsbereich 1, 3 und 5 benutzt wird, eine davon verschiedene zweite Konfiguration k2 in den Entfernungsbereichen 2 und 4. Hinsichtlich der Konfigurationen entsprechen sich somit die Teildarstellungen Region 1, Region 3 und Region 5 einerseits sowie die Teildarstellungen Region 2 und Region 4 andererseits.

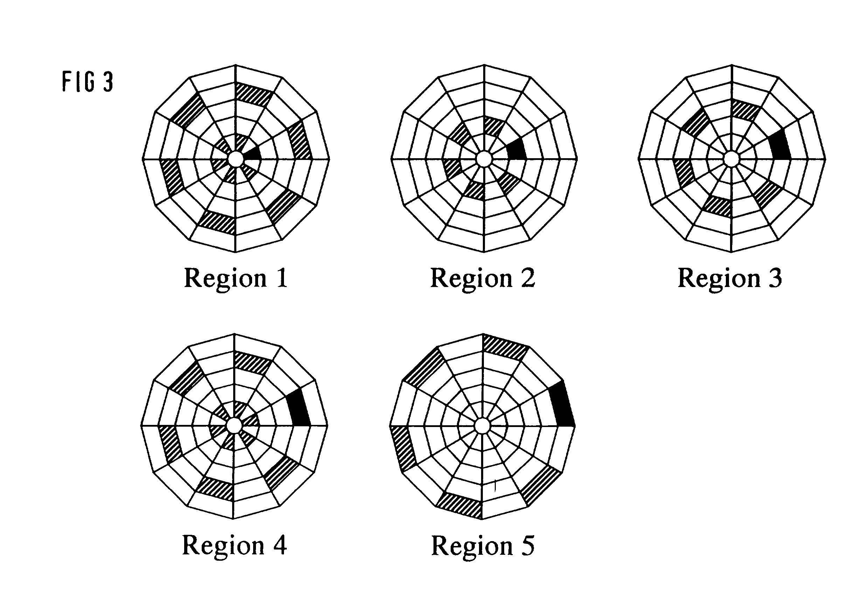

Beim Ausführungsbeispiel nach Figur 3 mit einem Szenario mit fünf Entfernungsbereichen mit Cluster Size 8 werden, unterschiedlich zum vorherigen Ausführungsbeispiel mit Cluster Size 4, in einem Sektor vier verschiedene Konfigurationen verwendet und im benachbarten Sektor vier weitere, zu den erstgenannten unterschiedlichen Konfigurationen. Dabei ist vorgesehen, daß in der ersten Teildarstellung im ersten Entfernungsbereich eine erste Konfiguration benutzt wird, die im vierten Entfernungsbereich wieder benutzt wird (siehe schwarzes Feld und schraffiertes Feld in den Entfernungsbereichen 1 und 4). Einen entsprechenden Fall zeigt die Teildarstellung 4 (Region 4), bei der die Zelle im ersten Entfernungsbereich schraffiert und die entsprechende Zelle im vierten Entfernungsbereich schwarz gezeichnet ist. Die drei weiteren der insgesamt vier in einem Sektor vorgesehenen Konfigurationen werden in den Entfernungsbereichen 2, 3 und 5 benutzt (vgl. hierzu die schwarz gezeichneten Zellen in den Teildarstellungen Region 2, Region 3 und Region 5).

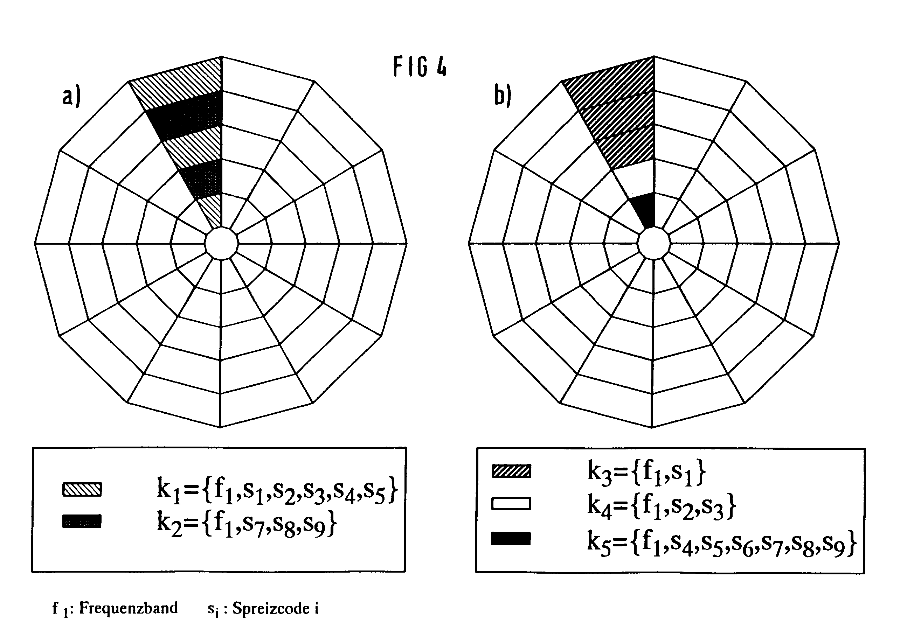

Figur 4 zeigt in zwei Teildarstellungen jeweils ein auf dem CDMA-Vielfachzugriffsverfahren basierendes Beispiel für eine dynamische Kanalzuordnung. Die Netzstruktur entspricht hierbei der in den Figuren 2 und 3 dargestellten Ausführungsbeispiele. Bei der Anordnung nach Figur 4a ist vorgesehen, daß in den Zellen der Entfernungsbereiche 1, 3 und 5 jeweils mit der Konfiguration k1, bestehend aus dem Frequenzband f1 und den Spreizcodes s1,s2,s3,s4,s5 gearbeitet wird und in den Zellen der Entfernungsbereiche 2 und 4 (dunkle Schraffur) mit der Konfiguration k2, bestehend aus dem Frequenzband f1 und den Spreizcodes s7,s8,s9.

Die Anordnung nach Figur 4b zeigt ein Beispiel, in dem die Zellen mehrerer Entfernungsbereiche (Region 3, 4 und 5) zusammengefaßt werden zu einer Zelle, in der die Konfiguration k3, bestehend aus dem Frequenzband f1 und dem Spreizcode s1 benutzt wird. In der Zelle der zweiten 2 Region wird die Konfiguration k4, bestehend aus dem Frequenzband f1 und den Spreizcodes s2,s3 verwendet, während der Zelle der innersten Region die Konfiguration k5, bestehend aus dem Frequenzband f1 und den Spreizcodes s4,s5,s6,s7, s8,s9 zur Verfügung steht.

Anhand der Anordnungen nach Figur 4a und 4b wird also gezeigt, daß innerhalb der Zellen eine beliebige Verteilung der insgesamt zur Verfügung stehenden Konfigurationen möglich ist und daß auch bei entsprechendem Bedarf beliebige Zellen zusammengefaßt werden können, die mit einer gleichen Konfiguration arbeiten. Es ist also eine Anpassung an die jeweiligen verkehrsbedingten Situationen möglich. Eine solche Flexibilität hinsichtlich der Kanalzuteilung ist durch die erfindungsgemäße Netzstruktur mit einer zentralen, allen Zellen gemeinsamen Basisstation besonders günstig, da die Verwaltung für alle Zellen an einem Punkt erfolgt und somit interne Schaltungen besonders einfach durchzuführen sind. Dies ist ein wesentlicher Vorteil der erfindungsgemäßen Anordnung neben der vereinfachten und kostensparenden Infrastruktur durch Wegfall von vielen Basisstationen und deren Zusammenlegung an einer zentralen Stelle.

## Patentansprüche

1. Mobiles Funknetz mit einer Anzahl von Basisstationen in gegenseitiger räumlicher Anordnung nach Art eines Zellularsystems, bei dem eine ringförmige Struktur mit um das Zentrum plazierten Zellringen sowie eine zentrale Basisstation im Zentrum mit auf einem erhöhten Standort installierten Antennen vorgesehen sind, wobei die Antennen als stark bündelnde Richtantennen ausgebildet sind, **gekennzeichnet** durch eine Unterteilung der ringförmigen Struktur in Sektoren entsprechend der Anzahl der Zellen innerhalb jedes Zellrings, mit unterschiedlichen, aus einem oder mehreren Frequenzbändern und einer Menge von Spreizcodes bestehenden Konfigurationen in benachbarten Sektoren, und durch eine Ausleuchtung aller Zellen bzw. den Empfang aus den einzelnen Zellen durch die zentrale Basisstation mit den Antennen in der Weise, daß wenigstens zwei vom Antennenstandort in radialer Richtung liegende Zellen innerhalb desselben Sektors mit jeweils derselben Konfiguration versorgt werden.

2. Mobiles Funknetz mit einer Anzahl von Basisstationen in gegenseitiger räumlicher Anordnung nach Art eines Zellularsystems, bei dem eine ringförmige Struktur mit um das Zentrum plazierten Zellringen, sowie eine zentrale Basisstation im Zentrum mit auf einem erhöhten Standort installierten Antennen vorgesehen sind, wobei die Antennen als stark bündelnde Richtantennen ausgebildet sind, **gekennzeichnet** durch eine Unterteilung der ringförmigen Struktur in Sektoren entsprechend der Anzahl der Zellen innerhalb jedes Zellrings, mit unterschiedlichen, aus einem oder mehreren Frequenzbändern und aus Zeitschlitzen oder Polarisationsebenen bestehenden Konfigurationen in benachbarten Sektoren, und durch eine Ausleuchtung aller Zellen bzw. den Empfang aus den einzelnen Zellen durch die zentrale Basisstation mit den Antennen in der Weise, daß wenigstens zwei vom Antennenstandort in radialer Richtung liegende Zellen innerhalb desselben Sektors mit jeweils derselben Konfiguration versorgt werden.

3. Mobiles Funknetz mit einer Anzahl von Basisstationen in gegenseitiger räumlicher Anordnung nach Art eines Zellularsystems, bei dem eine ringförmige Struktur mit um das Zentrum plazierten Zellringen, sowie einer zentralen Basisstation im Zentrum mit auf einem erhöhten Standort installierten Antennen vorgesehen sind, wobei die Antennen als stark bündelnde Richtantennen ausgebildet sind, **gekennzeichnet** durch eine Unterteilung der ringförmigen Struktur in Sektoren entsprechend der Anzahl der Zellen innerhalb jedes Zellrings, mit einer beliebigen Kombination der in Anspruch 1 und 2 angegebenen Konfigurationen aus Frequenzbändern und Spreizcodes, Zeitschlitzen oder Polarisationsebenen, und durch eine Ausleuchtung aller Zellen bzw. den Empfang aus den einzelnen Zellen durch die zentrale Basisstation mit den Antennen in der Weise, daß wenigstens zwei vom Antennenstandort in radialer Richtung liegende Zellen innerhalb desselben Sektors mit jeweils derselben Konfigurationskombination versorgt werden.

4. Mobiles Funknetz nach einem der Ansprüche 1 bis 3, dadurch **gekennzeichnet**, daß die zwischen Zellen mit gleicher Frequenz liegende Anzahl von Zellen innerhalb eines Sektors variabel ist.

5. Mobiles Funknetz nach einem der Ansprüche 1 bis 4, dadurch **gekennzeichnet**, daß durch Zusammenfassung benachbarter Zellen gleicher oder benachbarter Sektoren zu einer neuen Zelle eine flexible Zellgestaltung erfolgt.

## Claims

1. Mobile radio network having a number of base stations in mutual spatial arrangement in the manner of a cellular system, in which a ring-shaped structure having cell rings positioned around the centre and a central base station in the centre with antennae installed at a raised location are provided, the antennae being designed as strongly focusing directional antennae, characterized by a subdivision of the ring-shaped structure into sectors in accordance with the number of cells within each cell ring, with different configurations, comprising one or more frequency bands and a set of spread codes, in adjacent sectors, and by an illumination of all the cells, or the reception from the individual cells respectively, by the central base station with the antennae in such a manner that at least two cells lying in radial direction from the antenna location within the same sector are supplied with the same configuration in each case.

2. Mobile radio network having a number of base stations in mutual spatial arrangement in the manner of a cellular system, in which a ring-shaped structure having cell rings positioned around the centre and a central base station in the centre with antennae installed at a raised location are provided, the antennae being designed as strongly focusing directional antennae, characterized by a subdivision of the ring-shaped structure into sectors in accordance with the number of cells within each cell ring, with different configurations, comprising one or more frequency bands and time slots or polarization levels, in adjacent sectors, and by an illumination of all the cells, or the reception from the individual cells respectively, by the central base station with the antennae in such a manner that at least two cells lying in radial direction from the antenna location within the same sector are supplied with the same configuration in each case.

3. Mobile radio network having a number of base stations in mutual spatial arrangement in the manner of a cellular system, in which a ring-shaped structure having cell rings positioned around the centre and a central base station in the centre with antennae installed at a raised location are provided, the antennae being designed as strongly focusing directional antennae, characterized by a subdivision of the ring-shaped structure into sectors in accordance with the number of cells within each cell ring, with any desired combination of the configurations specified in Claim 1 and 2 and comprising frequency bands and spread codes, time slots or polarization levels, and by an illumination of all the cells, or the reception from the individual cells respectively, by the central base station with the antennae in such a manner that at least two cells lying in radial direction from the antenna location within the same sector are supplied with the same combination of configurations in each case.

4. Mobile radio network according to one of Claims 1 to 3, characterized in that the number of cells within a sector lying between cells having the same frequency is variable.

5. Mobile radio network according to one of Claims 1 to 4, characterized in that a flexible cell structure is produced by combining adjacent cells of the same or adjacent sectors to form a new cell.

## Revendications

1. Réseau de radiocommunications mobile comprenant un certain nombre de stations de base selon une disposition réciproque dans l'espace à la manière d'un système cellulaire, dans lequel sont prévus une structure de forme annulaire présentant des anneaux de cellules placés autour du centre, ainsi que, au centre, une station de base centrale comprenant des antennes installées en un emplacement surélevé, les antennes étant réalisées sous la forme d'antennes directives à faisceau fortement directif, **caractérisé** par une subdivision de la structure de forme annulaire en secteurs, conformément au nombre de cellules à l'intérieur de chaque anneau de cellule, présentant dans des secteurs voisins, des configurations différentes constituées d'une ou de plusieurs bandes de fréquence et d'une quantité de codes d'extension, et par un éclairement de toutes les cellules ou la réception à partir des cellules individuelles par la station de base centrale avec les antennes, de manière telle qu'au moins deux cellules situées sur une direction radiale à partir de l'emplacement de l'antenne à l'intérieur du même secteur, soient respectivement desservies par la même configuration.

2. Réseau de radiocommunications mobile comprenant un certain nombre de stations de base selon une disposition réciproque dans l'espace à la manière d'un système cellulaire, dans lequel sont prévus une structure de forme annulaire présentant des anneaux de cellules placés autour du centre, ainsi que, au centre, une station de base centrale comprenant des antennes installées en un emplacement surélevé, les antennes étant réalisées sous la forme d'antennes directives à faisceau fortement directif, **caractérisé** par une subdivision de la structure de forme annulaire en secteurs conformément au nombre de cellules à l'intérieur de chaque anneau de cellule, présentant dans des secteurs voisins, des configurations différentes constituées d'une ou de plusieurs bandes de fréquence et de fenêtres de temps ou de plans de polarisation, et par un éclairement de toutes les cellules ou la réception à partir des cellules individuelles par la station de base centrale avec les antennes, de manière telle qu'au moins deux cellules situées sur une direction radiale à partir de l'emplacement de l'antenne à l'intérieur du même secteur, soient respectivement desservies par la même configuration.

3. Réseau de radiocommunications mobile comprenant un certain nombre de stations de base selon une disposition réciproque dans l'espace à la manière d'un système cellulaire, dans lequel sont prévus une structure de forme annulaire présentant des anneaux de cellules placés autour du centre, ainsi que, au centre, une station de base centrale comprenant des antennes installées en un emplacement surélevé, les antennes étant réalisées sous la forme d'antennes directives à faisceau fortement directif, **caractérisé** par une subdivision de la structure de forme annulaire en secteurs conformément au nombre de cellules à l'intérieur de chaque anneau de cellule, présentant dans des secteurs voisins, une combinaison quelconque des configurations de bandes de fréquence et de codes d'extension, de fenêtres de temps ou de plans de polarisation, indiquées dans les revendications 1 et 2, et par un éclairement de toutes les cellules ou la réception à partir des cellules individuelles par la station de base centrale avec les antennes, de manière telle qu'au moins deux cellules situées sur une direction radiale à partir de l'emplacement de l'antenne à l'intérieur du même secteur, soient respectivement desservies par la même configuration.

4. Réseau de radiocommunications mobile selon l'une des revendications 1 à 3, **caractérisé** en ce que le nombre des cellules à l'intérieur d'un secteur, situées entre des cellules de même fréquence, est variable.

5. Réseau de radiocommunications mobile selon l'une des revendications 1 à 4, **caractérisé** en ce que par regroupement de cellules voisines de secteurs identiques ou voisins, en une nouvelle cellule, on réalise une configuration de cellule flexible.
